# EUROPEAN PATENT SPECIFICATION

(11) **EP 4 582 715 B1**
(45) Date of publication and mention of the grant of the patent: **01.07.2026**
(21) Application number: 24209869.7
(22) Date of filing: 30.10.2024
(51) Int. Cl.: F16D 55/227, F16D 65/18, F16D 125/40, F16D 121/24

(54) **BRAKE DEVICE AND VEHICLE INCLUDING THE SAME**
BREMSVORRICHTUNG UND FAHRZEUG DAMIT
DISPOSITIF DE FREINAGE ET VÉHICULE LE COMPRENANT

(30) Priority: 05.01.2024 KR 20240002244
(43) Date of publication of application: 09.07.2025
(73) Proprietor: Hyundai Mobis Co., Ltd., Gangnam-gu Seoul 06141 (KR)
(72) Inventor: YOON, Bo Ram, 16891 Yongin-si, Gyeonggi-do (KR); BOO, Sang Pil, 16891 Yongin-si, Gyeonggi-do (KR); SHIN, Choong Sik, 16891 Yongin-si, Gyeonggi-do (KR)
(74) Representative: Jung, Minkyu

(56) References cited:
- JP-A- 2004 218 714
- US-A1- 2005 167 211
- US-A1- 2007 209 891
- US-B2- 11 230 275

## Description

### TECHNICAL FIELD

The disclosure relates to a brake device applicable to a vehicle and a vehicle including the same, and more particularly, to a brake device for reducing the overall length of a caliper body and a vehicle including the same.

### BACKGROUND

A brake device mounted in a vehicle is a device for decelerating, stopping, or maintaining a stopped state of a vehicle while driving and is located inside a rotating wheel, and brakes a vehicle by strongly pressing a disc-shaped brake disc rotating together with the wheel using brake pads from both sides.

In a general brake device, one brake pad is generally pushed by one piston to pressurize a brake disc, but there are also cases where the brake pad is pushed by two or more pistons.

Therefore, since a caliper body should include an internal space to accommodate pistons and piston driving members, the overall length of the caliper body should be secured, and a certain volume and weight are required for the caliper body. This is directly related to the manufacturing cost of the brake device.

In addition, when a brake pad is propelled by a piston, evenly pressing the brake pad is important for brake performance. As pressure is distributed more evenly over the entire surface of the brake pad, the brake pad may apply pressure more evenly to the brake disc. In other words, preventing uneven wear of the brake pad reduces the possibility of piston damage and prevents degradation of the brake performance.

Documents JP2004/218714A and US2005/167211A1 disclose known electromechanical brake devices.

Accordingly, there is a need for an improved technique for improving the performance of the brake device while reducing the overall length of the caliper body.

### SUMMARY

Accordingly, the disclosure is directed to a brake device and a vehicle including the same which substantially obviate one or more problems due to limitations and disadvantages of the related art.

An aspect of the disclosure is to provide a brake device and a vehicle including the same, and more particularly, to provide a brake device for securing brake performance while reducing manufacturing costs by reducing the overall length of a caliper body, and a vehicle including the same.

Another aspect of the disclosure is to provide a brake device for improving the surface pressure of a brake pad by evenly distributing pressure over one surface of the brake pad, and a vehicle including the same.

The objects to be achieved by the disclosure are not limited to what has been particularly described hereinabove and other objects not described herein will be more clearly understood by persons skilled in the art from the following detailed description.

According to an aspect of the disclosure, a brake device includes a caliper body, a brake pad mounted on one side of the caliper body, a mounting portion formed inside the caliper body, and a pad propulsion unit located in the mounting portion and configured for pressing one surface of the brake pad. The pad propulsion unit includes a rotation medium rotating, a conversion assembly engaged to the rotation medium and converting rotational motion into linear motion in conjunction with the rotation medium, and a piston formed to surround one side of the conversion assembly.

According to the invention the conversion assembly includes ball screw nut coupled to the rotation medium and rotating together with the rotation medium, and a ball screw bolt penetrating through the rotation medium and the ball screw nut and moving forward or backward by the rotation of the ball screw nut.

The conversion assembly may include a ball bearing mounted on an outer circumferential surface of the ball screw nut.

The ball screw nut may include a contact portion formed to protrude from the outer circumferential surface thereof and contacting the ball bearing.

According to the invention the ball screw bolt includes a head having a curved surface on one side thereof, and the piston may include a connecting surface having a curved surface formed to correspond to the curved surface of the head.

A gap may be formed between one side of the head and one side of the connecting surface.

According to the invention the conversion assembly includes a annular seal portion coupled to an outer circumferential surface of the head, and the piston includes an insertion groove formed to allow the seal portion to be inserted thereinto.

The ball screw bolt may include at least one anti-rotation groove formed therein, and the at least one anti-rotation groove may have a polygonal shape.

The piston may include at least two pressurizing portions which are symmetrically located spaced apart from each other in a left-right direction or an up-down direction with respect to a center of the conversion assembly.

According to another aspect of the disclosure, a vehicle includes the features according to claim 9.

A brake device and a vehicle including the same according to the disclosure may secure brake performance while reducing manufacturing costs by reducing the overall length of a caliper body.

Further, the surface pressure of a brake pad may be improved by evenly distributing pressure over one surface of the brake pad.

The effects that are achievable by the disclosure are not limited to what has been particularly described hereinabove and other advantages not described herein will be more clearly understood by persons skilled in the art from the following description.

### BRIEF DESCRIPTION OF DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a front view illustrating a brake device and a brake disc according to an embodiment of the disclosure;
FIG. 2 is a perspective view illustrating the brake device according to an embodiment of the disclosure;
FIG. 3 is a bottom view illustrating the brake device according to an embodiment of the disclosure;
FIG. 4 is a detailed side view illustrating a pad propulsion unit in a brake device according to an embodiment of the disclosure;
FIGS. 5 and 6 are diagrams referred to for describing the driving of a pad propulsion unit in a brake device according to an embodiment of the disclosure;
FIG. 7 is a diagram illustrating an anti-rotation groove formed in a ball screw bolt in a brake device according to an embodiment of the disclosure; and
FIGS. 8 to 11 are diagrams illustrating various embodiments of a piston in a brake device according to an embodiment of the disclosure.

### DETAILED DESCRIPTION

Description will now be given in detail according to exemplary embodiments disclosed herein, with reference to the accompanying drawings. The same or equivalent components may be provided with the same reference numbers, and description thereof will not be repeated. As used herein, the suffixes "module" and "part" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification, and should not be construed as limiting the invention disclosed in the present specification.

Although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, it will be understood that when an element is referred to as being "directly connected with" another element, there are no intervening elements present.

A singular representation may include a plural representation unless it represents a definitely different meaning from the context.

The terms such as "include" or "have" used herein are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

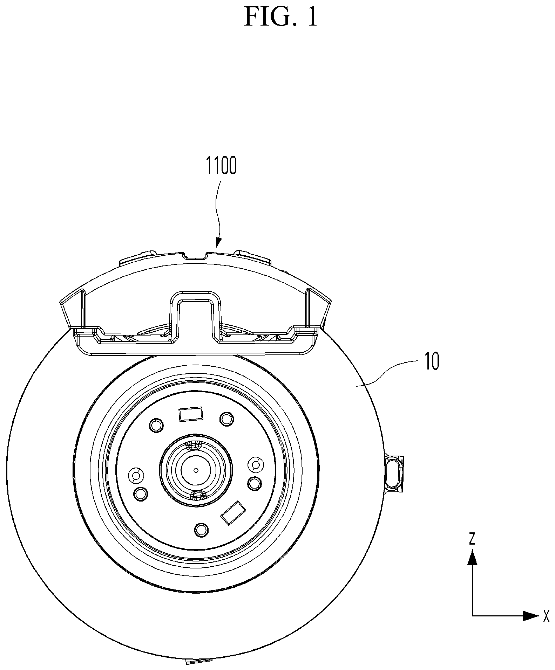

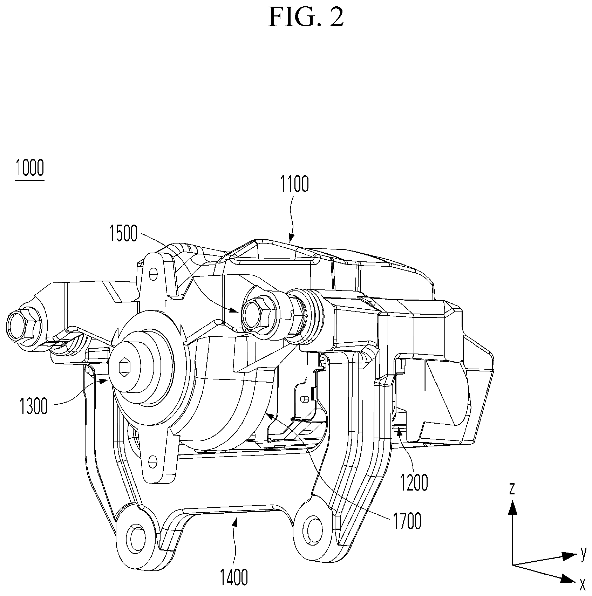

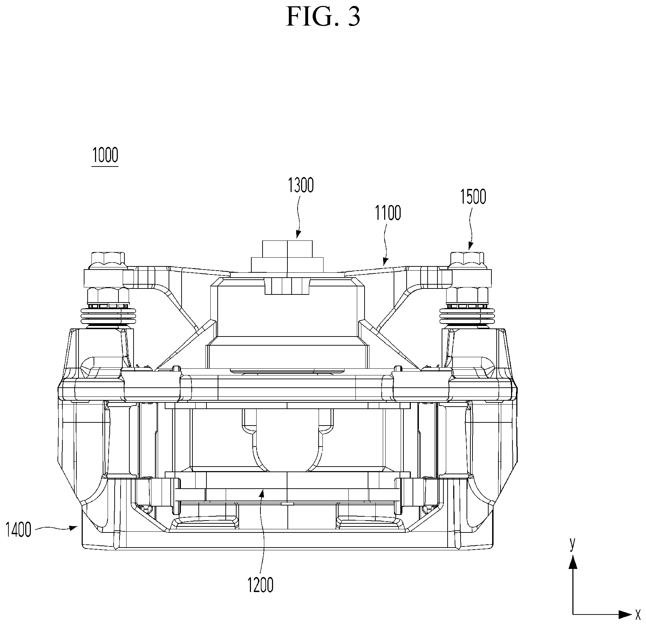

FIG. 1 is a front view illustrating a brake device 1000 and a brake disc 10 according to an embodiment of the disclosure. FIG. 2 is a perspective view illustrating the brake device 1000 according to an embodiment of the disclosure. FIG. 3 is a bottom view illustrating the brake device 1000 according to an embodiment of the disclosure.

Hereinafter, in describing the brake device 1000 according to an embodiment of the disclosure, the left and right directions will hereinafter be described based on an X-axis direction, the forward and backward directions will hereinafter be described based on a Y-axis direction, and the upper and lower directions will hereinafter be described based on a Z-axis direction.

Wheels of a vehicle are generally arranged on both left and right sides, and the front direction shown in FIG. 1 may be arranged to face the outside of the vehicle. Referring to FIGS. 1 and 2, the brake device 1000 according to the disclosure may be a device that brakes a vehicle by pressing the brake disc 10 of the vehicle with a brake pad 1200. During driving of the vehicle, the brake disc 10 may rotate with the wheels, and when the brake device 1000 applies pressure to the brake disc 10, the brake device 1000 can reduce the rotation speed of the wheels by applying resistance to rotation of the brake device 1000.

Referring to FIGS. 2 and 3, the brake device 1000 according to an embodiment of the disclosure may include a caliper body 1100, a brake pad 1200, and a pad propulsion unit 1300. In addition, the brake device 1000 according to the disclosure may further include a pad carrier 1400 and a connection pin 1500.

The caliper body 1100 may be a body to which the constituent components of the brake device 1000 can be connected. The caliper body 1100 may be provided in a shape similar to a " 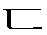 " shape, so that a portion of the brake disc 10 can be disposed in a recessed area. The caliper body 1100 may have a brake pad 1200 disposed therein so that the caliper body 1100 can press both sides of the brake disc 10. In addition, a pad propulsion unit 1300 that presses one surface of the brake pad 1200 may be seated in the caliper body 1100.

The material and shape of the caliper body 1100 may be determined in various ways by considering the positions, loads, etc. of other components. Preferably, the material of the caliper body 1100 may include a metal-based material. The caliper body 1100 may be made of a metal-based material with appropriate porosity to support a reaction force against a braking clamping force.

A pad carrier 1400 may be connected to the caliper body 1100 and the connection pin 1500, and may also be connected to both sides of the brake pad 1200 to guide the movement of the brake pad 1200. The brake pad 1200 may include protrusions formed on both sides thereof, and the pad carrier 1400 may include grooves corresponding to the protrusions, so that the protrusions of the brake pad 1200 can be inserted into the grooves of the pad carrier 1400.

The groove of the pad carrier 1400 may extend in the direction in which the brake pad 1200 moves to press the brake disc 10. Accordingly, the brake pad 1200 can move while the protrusions on both sides of the brake pad 1200 are guided by the pad carrier 1400.

The pad carrier 1400 may be connected to a fixed component such as a wheel knuckle (not shown), and the caliper body 1100 connected to the pad carrier 1400 may move while being guided in the direction of the connection pin 1500. For example, during a braking operation, the caliper body 1100 may move by the reaction force generated when the brake pad 1200 applies pressure to the brake disc 10. The direction of the connection pin 1500 may be parallel to the direction in which the brake pad 1200 moves.

In addition, the pad carrier 1400 may be made of a metal-based material with appropriate strength to support the braking torque acting on the brake pad 1200.

The brake pad 1200 may include a pad that directly contacts and rubs the brake disc 10, and a back plate connected to one surface of the brake pad 1200. A plurality of brake pads 1200 may be provided, and in this case, the first brake pad 1200 may press one side of the brake disc 10, and the second brake pad 1200 may press the other side of the brake disc 10. Two brake pads 1200 corresponding to one pair of brake pads 1200 may be arranged to face each other with the brake disc 10 interposed therebetween.

Although not shown in the drawings, the brake device 1000 according to an embodiment of the disclosure may include a motor for driving the pad propulsion unit 1300 and a gear unit composed of gears connected to the motor. The operation of the motor may be controlled based on electrical signals, and when the motor is operated, the rotational movement of the motor may be transmitted to the pad propulsion unit 1300 through the gear unit.

The gear unit may be comprised of an assembly of a plurality of gears for transmitting the rotational movement of the motor. The plurality of gears may be connected to a motor gear, and the types, numbers, positions, and sizes of the plurality of gears may include various structures designed by those skilled in the art. The plurality of gears may be comprised of a combination of various types of gears, such as spur gears, helical gears, and worm gears.

Additionally, the brake device 1000 according to an embodiment of the disclosure may include a mounting portion 1700 formed inside the caliper body 1100. The pad propulsion unit 1300 may be located in the mounting portion 1700 to press one surface of the brake pad 1200.

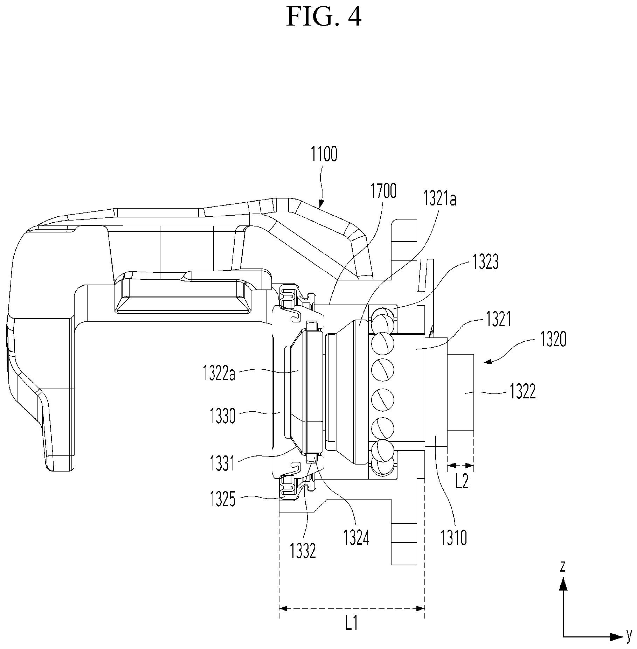

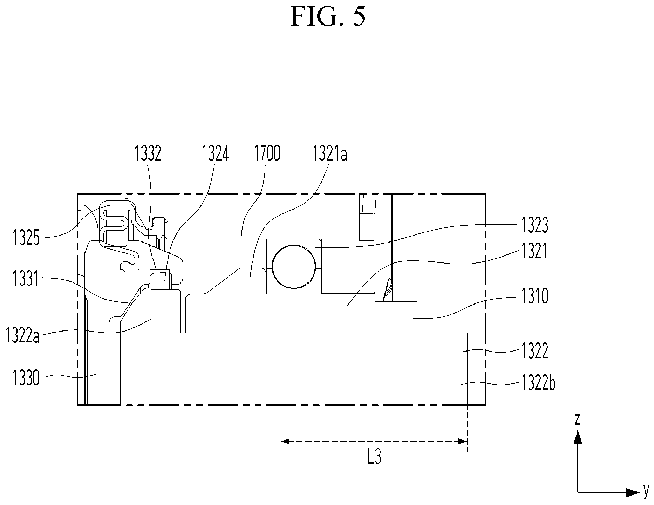

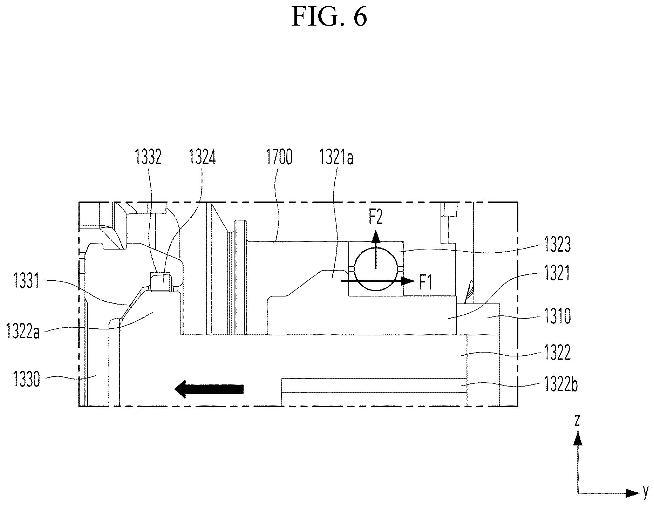

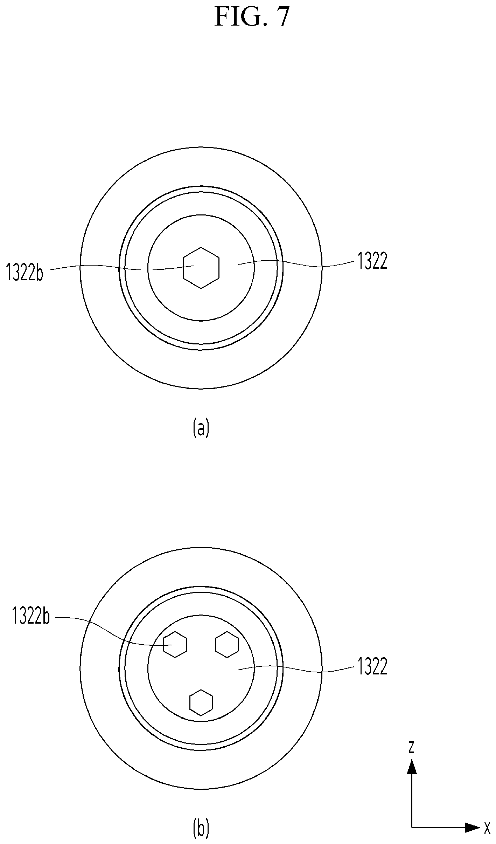

FIG. 4 is a detailed side view illustrating the pad propulsion unit 1300 in the brake device 1000 according to an embodiment of the disclosure. FIGS. 5 and 6 are diagrams referred to for describing the driving of the pad propulsion unit 1300 in the brake device 1000 according to an embodiment of the disclosure. FIG. 7 is a diagram illustrating an anti-rotation groove 1322b formed in a ball screw bolt 1322 in the brake device 1000 according to an embodiment of the disclosure.

In the brake device 1000 according to an embodiment of the disclosure, the pad propulsion unit 1300 may receive power from the afore-described gear unit to press and move the brake pad 1200. The pad propulsion unit 1300 may include a rotation medium 1310, a conversion assembly 1320, and a piston 1330.

First, the rotation medium 1310 may receive power from the gear unit to rotate. The conversion assembly 1320 may include various components which may convert rotational motion into linear motion in conjunction with the rotation medium 1310, and connection mechanisms between the components. For example, in the brake device 1000 according to an embodiment of the disclosure, the conversion assembly 1320 may include a ball screw nut 1321, the ball screw bolt 1322, and a ball bearing 1323.

In addition, the piston 1330 may be formed to surround one side of the conversion assembly 1320. More specifically, as illustrated in FIG. 4, one side of the ball screw bolt 1322 may be inserted into the piston 1330 so that the piston 1330 may move linearly together with the ball screw bolt 1322.

The ball screw nut 1321 may be coupled to the rotation medium 1310 so as to rotate together with the rotation medium 1310. Referring to FIGS. 2 and 3 together, a rotation axis of the ball screw nut 1321 may be parallel to a direction (y-axis direction) in which the brake pad 1200 moves. The ball screw nut 1321 may include a spiral screw thread on an inner surface thereof.

The ball screw bolt 1322 may penetrate through the rotation medium 1310 and the ball screw nut 1321 and move forward or backward by rotation of the ball screw nut 1321. That is, the ball screw bolt 1322 may move in a straight line parallel to the direction (y-axis direction) in which the brake pad 1200 moves, by the rotation of the ball screw nut 1321.

Particularly, the ball screw bolt 1322 may be formed longer than the length of the ball screw nut 1321 in order to secure a moving area for moving forward or backward (in the y-axis direction) and to cope with wear of the brake pad 1200. Therefore, one end of the ball screw bolt 1322 may protrude from one end of the ball screw nut 1321 by a length of L2, as illustrated in FIG. 4. This allows the performance of the brake device 1000 to be maintained even if the brake pad 1200 is worn out in the future, by ensuring that the ball screw bolt 1322 has an extra length.

Particularly, in the brake device 1000 according to an embodiment of the disclosure, the conversion assembly 1320 may include the ball bearing 1323 located on an outer circumferential surface of the ball screw nut 1321. The ball bearing 1323 may assist in the rotational motion of the ball screw nut 1321, as the ball screw nut 1321 rotates in conjunction with the rotation medium 1310.

In addition, in the brake device 1000 according to an embodiment of the disclosure, the ball screw nut 1321 may include a contact portion 1321a which is formed to protrude from the outer circumferential surface and contacts the ball bearing 1323. Accordingly, the ball bearing 1323 is located between the contact portion 1321a and one end of the caliper body 1100 and is fixed in position.

Referring to FIGS. 5 and 6 together, the piston 1330 moves forward due to the advancement of the ball screw bolt 1322, thereby generating a clamping force. Then, a reaction force F1 against the clamping force applied to the piston 1330 is generated and transmitted to the ball screw nut 1321 along the ball screw bolt 1322. Then, the reaction force F1 against the clamping force through the contact portion 1321a may be transferred to the caliper body 1100 through the ball bearing 1323.

That is, the brake device 1000 according to an embodiment of the disclosure may transfer the reaction force F1 against the clamping force to the caliper body 1100 through the structure in which the contact portion 1321a of the ball screw nut 1321 and the ball bearing 1323 are in contact, thereby improving the durability of the components included in the brake device 1000 of the disclosure.

Further, the ball bearing 1323 in the brake device 1000 according to an embodiment of the disclosure may support load F2 of the rotation medium 1310, the conversion assembly 1320, and the piston 1330, thereby improving the durability of the components included in the brake device 1000 of the disclosure as described above.

Further, the ball screw bolt 1322 in the brake device 1000 according to an embodiment of the disclosure may include, on one side thereof, a head 1322a including a curved surface. The piston 1330 may include a connecting surface 1331 formed with a curve corresponding to the curve of the head 1322a. A gap may be formed between one side of the head 1322a and one side of the connecting surface 1331.

This may allow the brake device 1000 according to an embodiment of the disclosure to organically pivot while the head 1322a of the ball screw bolt 1322 is inserted into the piston 1330. Particularly, the gap between the one side of the head 1322a and the one side of the connecting surface 1331 may serve to secure an area for organic movement of the ball screw bolt 1322.

Further, the conversion assembly 1320 in the brake device 1000 according to an embodiment of the disclosure may include a annular seal portion 1324 coupled to an outer circumferential surface of the head 1322a. The piston 1330 may be formed with an insertion recess 1332 into which the seal portion 1324 is inserted. The head 1322a of the ball screw bolt 1322 and the piston 1330 may be coupled through the seal portion 1324, and when the ball screw bolt 1322 moves linearly, the piston 1330 may also move linearly together with the ball screw bolt 1322 and press one surface of the brake pad 1200.

Therefore, the brake device 1000 according to an embodiment of the disclosure may cope with the wear of the brake pad 1200 through the combination and rotation of the components of the pad propulsion unit 1300 as described above with reference to FIGS. 4 to 6, while enabling reduction of an overall length L1 of the caliper body 1100.

That is, compared to conventional pad-propelling components, the brake device 1000 according to an embodiment of the disclosure enables reduction of the lengths of the piston 1330 and the ball screw nut 1321 by the rotation structure of the ball screw nut 1321 and the ball bearing 1323 and the movement structure of the piston 1330 into which the ball screw bolt 1322 and the ball screw bolt 1322 are inserted and coupled, thereby reducing the overall length L1 of the caliper body 1100.

Further, the brake device 1000 according to an embodiment of the disclosure enables reduction of the volume and weight of the caliper body 1100 by reducing the overall length L1 of the caliper body 1100, thereby obtaining the effect of reducing the manufacturing cost of the brake device 1000.

Additionally, the brake device 1000 according to an embodiment of the disclosure may further include a boot 1325 which blocks a gap between the piston 1330 and the caliper body 1100 to block the introduction of a foreign material from the outside.

Referring to FIGS. 5 and 7 together, in the brake device 1000 according to an embodiment of the disclosure, the ball screw bolt 1322 may include at least one anti-rotation groove 1322b formed therein. The at least one anti-rotation groove 1322b may have a polygonal shape.

In an embodiment, the anti-rotation groove 1322b may be formed at the center of the ball screw bolt 1322, as illustrated in FIG. 7(a), and three anti-rotation grooves 1322b may be formed spaced apart from the center of the ball screw bolt 1322 by the same distance, as illustrated in FIG. 7(b). This is to prevent the rotation of the ball screw bolt 1322 with an end coupled to another member such as an actuator by inserting a member such as a pin into the anti-rotation groove 1322b.

Further, the member such as a pin inserted into the anti-rotation groove 1322b may be integrated with or press-fitted into another member such as an actuator so as to support a relatively high rotational torque.

The anti-rotation groove 1322b may be formed to an appropriate depth L3 to obtain the above-described effect. For example, considering a lining thickness of the brake pad 1200, the anti-rotation groove 1322b may be formed to a depth of at least twice (the lining thickness of the brake pad - 2 mm).

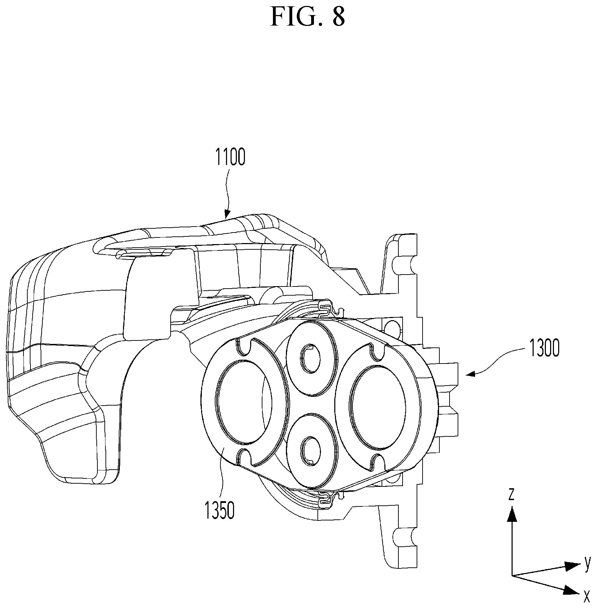

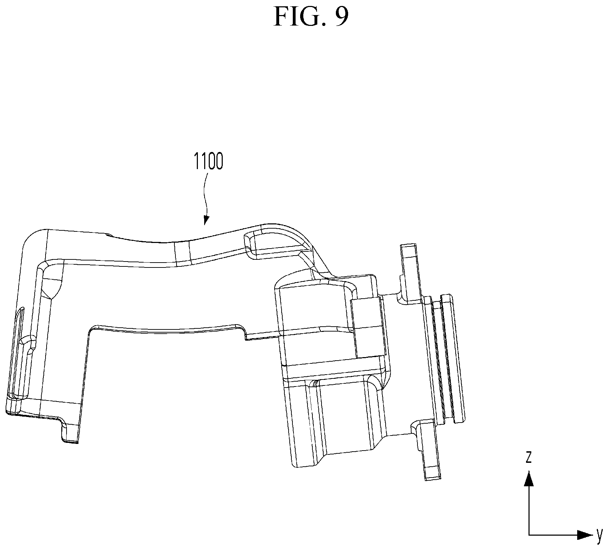

FIGS. 8 to 11 are diagrams illustrating various embodiments of the piston 1330 in the brake device 1000 of the disclosure. FIG. 8 is a diagram illustrating pivoting of the piston 1330 according to another embodiment of the piston 1330 in the brake device 1000 of the disclosure, and FIG. 9 is a diagram illustrating pivoting of the piston 1330 in the case where the caliper body 1100 is deformed.

As described above, when uneven wear occurs on a surface of the brake pad 1200, pressure is not evenly distributed over the surface of the brake pad 1200. This may be a direct cause of degrading the performance of the brake device 1000 that brakes a vehicle.

Moreover, this problem may also occur when the caliper body 1100 is deformed. For example, as illustrated in FIG. 9, when one side of the caliper body 1100 is bent and the piston 1330 moves in a straight line, pressure may not be applied evenly to the entire surface of the brake pad 1200.

Therefore, the brake device 1000 according to an embodiment of the disclosure may solve the above-described problem through various shapes of the piston 1330. That is, as illustrated in FIGS. 8 to 11, the piston 1330 may include various shapes of members into which the head 1322a of the ball screw bolt 1322 may be inserted, and include at least two pressurizing portions 1350 which are located symmetrically spaced apart from each other in a left-right direction (x-axis direction) or an up-down direction (z-axis direction) with respect to the center.

As described above with reference to FIG. 4, the piston 1330 may organically pivot while rotating, through the connecting surface 1331 of the piston 1330 and a curved surface of the head 1322a. Further, a pivoting area of the piston 1330 may be secured through the gap formed between the one side of the head 1322a and the one side of the connecting surface 1331. This may allow the piston 1330 to press the brake pad 1200, while rotating, even if the brake pad 1200 is unevenly worn out. In addition, even if the caliper body 1100 is deformed, the piston 1330 may press the brake pad 1200, while rotating.

Therefore, the brake device 1000 according to an embodiment of the disclosure may evenly apply pressure to the brake pad 1200 and additionally prevent the possibility of damage to the piston 1330, thereby maintaining the performance of the brake device 1000 that brakes the vehicle.

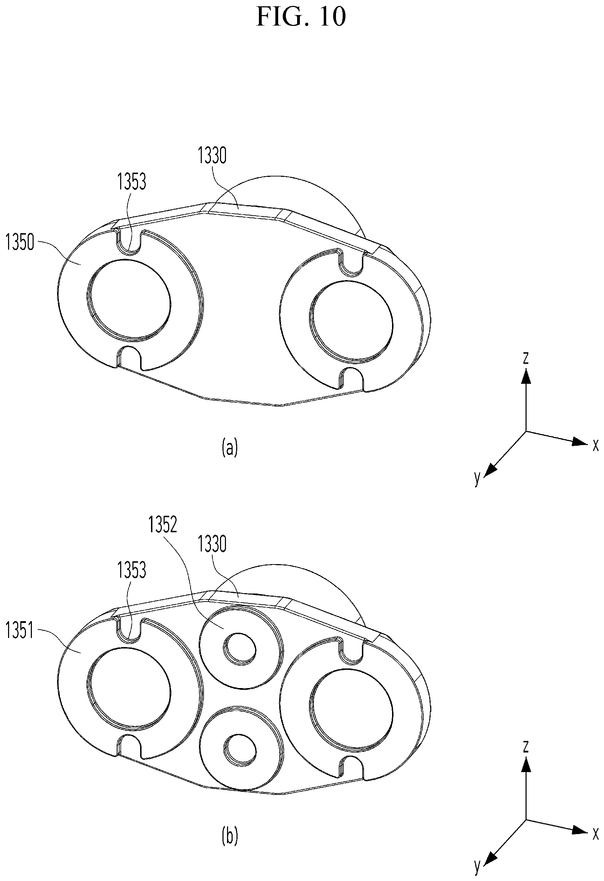

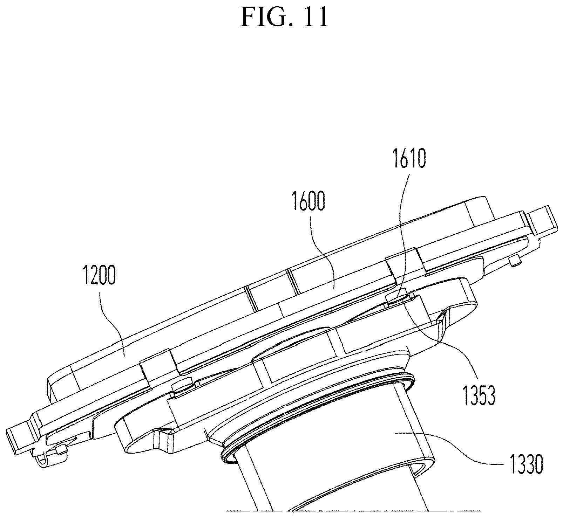

FIG. 10 is a detailed diagram illustrating at least two pressurizing portions 1350 included in the piston 1330, and FIG. 11 is a diagram illustrating the movement of the pressurizing portions 1350 through stopper grooves 1353 and stopper protrusions 1610.

As illustrated in FIG. 10(a), the brake device 1000 according to an embodiment of the disclosure may include at least two pressurizing portions 1350 which are symmetrically located spaced apart from each other in the left-right direction (x-axis direction) with respect to the center of the piston 1330. This enables pressing the brake pad 1200 with a uniform force.

In another embodiment of the disclosure, as illustrated in FIG. 10(b), at least two pressurizing portions 1350 which are symmetrically located spaced apart from each other in the up-down direction (z-axis direction) with respect to the center of the piston 1330 may be further included.

For convenience of description, the pressurizing portions 1350 that are symmetrically located spaced apart from each other in the left-right direction (x-axis direction) are referred to as first pressurizing portions 1351, and the pressurizing portions 1350 that are symmetrically located spaced apart from each other in the up-down direction (z-axis direction) are referred to as second pressurizing portions 1352.

When the distance between the first pressurizing portions 1351 that are located spaced apart from each other in a first direction (x-axis direction) with respect to the center of the piston 1330 increases, moment formed in the piston 1330 increases. Therefore, it is necessary to control the increase of the moment formed in the piston 1330.

To this end, the brake device 1000 according to an embodiment of the disclosure may further include the second pressurizing portions 1352 which are symmetrically located spaced apart from each other in a vertical direction (z-axis direction) with respect to the center of the piston 1330, thereby increasing a pressurizing area that presses the brake pad 1200 at the center of the piston 1330. This may reduce the moment formed in the piston 1330. Accordingly, the possibility of damage to the piston 1330 may be reduced.

In addition, referring to FIGS. 2 and 3 together, the brake device 1000 according to an embodiment of the disclosure may further include a back plate 1600 located between one surface of the brake pad 1200 and the piston 1330. The back plate 1600 may include stopper protrusions 1610 formed on one surface thereof, and the at least two pressurizing portions 1350 described above may include stopper grooves 1353 that come into contact with the stopper protrusions 1610.

This is to prevent the pressurizing areas of the plurality of pressurizing portions 1350 from moving out of an area where the brake pad 1200 is located during pivoting of the piston 1330 on one side of the conversion assembly 1320.

That is, to enable the plurality of pressurizing portions 1350 to evenly apply pressure to the entire surface of the brake pad 1200, the brake device 1000 according to an embodiment of the disclosure is provided with the stopper protrusions 1610 and the stopper grooves 1353 that come into contact with the stopper protrusions 1610, thereby preventing the pressurizing areas of the plurality of pressurizing portions 1350 from moving out of the area where the brake pad 1200 is located.

Further, in an embodiment for reducing the moment formed in the piston 1330, when the first pressurizing portions 1351 and the second pressurizing portions 1352 are provided, the stopper grooves 1353 may be formed in the first pressurizing portions 1351 in consideration of the rotational shape of the piston 1330, as illustrated FIG. 10(b).

In summary, the brake device and the vehicle including the same according to the disclosure may secure brake performance while reducing manufacturing costs by reducing the overall length of the caliper body. In addition, pressure may be evenly distributed over one surface of the brake pad to improve the surface pressure of the brake pad.

The above detailed description is to be construed in all aspects as illustrative and not restrictive. The scope of the disclosure is determined by the appended claims.

## Claims

1. A brake device (1000) comprising:
a caliper body (1100);
a brake pad (1200) mounted on one side of the caliper body (1100);
a mounting portion (1700) formed inside the caliper body (1100); and
a pad propulsion unit (1300) located in the mounting portion (1700) and configured for pressing one surface of the brake pad (1200),
wherein the pad propulsion unit (1300) includes:
a rotation medium (1310) rotating;
a conversion assembly (1320) engaged to the rotation medium (1310) and converting rotational motion into linear motion in conjunction with the rotation medium (1310); and
a piston (1330) formed to surround one side of the conversion assembly (1320),
wherein the conversion assembly (1320) includes:
a ball screw nut (1321) coupled to the rotation medium (1310) and rotating together with the rotation medium (1310); and
a ball screw bolt (1322) penetrating through the rotation medium (1310) and the ball screw nut (1321) and moving forward or backward by the rotation of the ball screw nut (1321),
wherein the ball screw bolt (1322) includes a head (1322a) having a curved surface on one side of the head (1322a),
**characterised in that**
the piston (1330) includes a connecting surface (1331) having a curved surface formed to correspond to the curved surface of the head (1322a),
wherein the head (1322a) of the ball screw bolt (1322) is inserted into the piston (1330),
wherein the conversion assembly (1320) further includes an annular seal portion (1324) coupled to an outer circumferential surface of the head (1322a), and
wherein the piston (1330) includes an insertion groove into which the seal portion (1324) is inserted.

2. The brake device (1000) of claim 1, wherein the conversion assembly (1320) further includes a ball bearing (1323) mounted on an outer circumferential surface of the ball screw nut (1321).

3. The brake device (1000) of claim 2, wherein the ball screw nut (1321) includes a contact portion (1321a) formed to protrude from the outer circumferential surface thereof and contacting the ball bearing (1323).

4. The brake device of any one of claims 1 to 3, wherein a gap is formed between one side of the head (1322a) and one side of the connecting surface (1331).

5. The brake device (1000) of any one of claims 1 to 4,
wherein the ball screw bolt (1322) includes at least one anti-rotation groove (1322b) formed therein, and
wherein the at least one anti-rotation groove (1322b) has a polygonal shape.

6. The brake device (1000) of any one of claims 1 to 4, wherein the ball screw bolt (1322) is formed longer than a length of the ball screw nut (1321).

7. The brake device (1000) of any one of claims 1 to 6,
wherein the piston (1330) includes at least two pressurizing portions (1350) which are symmetrically located spaced apart from each other in a first direction or a second direction with respect to a center of the conversion assembly (1320), and
wherein the second direction is perpendicular to the first direction.

8. The brake device (1000) of claim 7,
wherein the at least two pressurizing portions (1350) include:
first pressurizing portions (1351) symmetrically located spaced apart from each other in the first direction; and
second pressurizing portions (1352) symmetrically located spaced apart from each other in the second direction,
wherein the first pressurizing portions (1351) include a stopper groove (1353) , and
wherein the brake device (1000) further include a back plate (1600) having a stopper protrusion (1610) formed on one surface thereof, and the stopper groove (1353)is configured to come into contact with the stopper protrusion (1610).

9. A vehicle comprising:
a vehicle body;
a wheel located under the vehicle body and rotating;
a brake disc (10) coupled to the wheel and rotating together with the wheel;
a brake device according to claim 1, wherein one end of the brake disc (10) is inserted into the caliper body (1100), and wherein one surface of the brake pad (1200) faces the brake disc (10).

10. The vehicle of claim 9, wherein the conversion assembly (1320) further includes a ball bearing (1323) mounted on an outer circumferential surface of the ball screw nut (1321).

11. The vehicle of claim 10, wherein the ball screw nut (1321) includes a contact portion (1321a) formed to protrude from the outer circumferential surface thereof and contacting the ball bearing (1323).

## Patentansprüche

1. Bremsvorrichtung (1000), umfassend:
einen Bremssattelkörper (1100);
einen Bremsbelag (1200), der an einer Seite des Bremssattelkörpers (1100) montiert ist;
einen Montageabschnitt (1700), der im Inneren des Bremssattelkörpers (1100) ausgebildet ist; und
eine Belagantriebseinheit (1300), die sich in dem Montageabschnitt (1700) befindet und dazu ausgebildet ist, auf eine Oberfläche des Bremsbelags (1200) zu drücken,
wobei die Belagantriebseinheit (1300) Folgendes umfasst:
ein Rotationsmedium (1310), das rotiert;
eine Umwandlungsbaugruppe (1320), die mit dem Rotationsmedium (1310) in Eingriff steht und in Verbindung mit dem Rotationsmedium (1310) eine Drehbewegung in eine lineare Bewegung umwandelt; und
einen Kolben (1330), der so ausgebildet ist, dass er eine Seite der Umwandlungsbaugruppe (1320) umgibt,
wobei die Umwandlungsbaugruppe (1320) Folgendes umfasst:
eine Kugelgewindemutter (1321), die mit dem Rotationsmedium (1310) gekoppelt ist und zusammen mit dem Rotationsmedium (1310) rotiert; und
eine Kugelgewindespindel (1322), die das Rotationsmedium (1310) und die Kugelgewindemutter (1321) durchdringt und sich durch die Drehung der Kugelgewindemutter (1321) vorwärts oder rückwärts bewegt,
wobei die Kugelgewindespindel (1322) einen Kopf (1322a) umfasst, der auf einer Seite des Kopfes (1322a) eine gekrümmte Oberfläche hat,
**dadurch gekennzeichnet, dass**
der Kolben (1330) eine Verbindungsfläche (1331) mit einer gekrümmten Oberfläche umfasst, die so ausgebildet ist, dass sie der gekrümmten Oberfläche des Kopfes (1322a) entspricht,
wobei der Kopf (1322a) der Kugelgewindespindel (1322) in den Kolben (1330) eingesetzt ist,
wobei die Umwandlungsbaugruppe (1320) ferner einen ringförmigen Dichtungsabschnitt (1324) umfasst, der mit einer Außenumfangsfläche des Kopfes (1322a) gekoppelt ist, und
wobei der Kolben (1330) eine Einsetznut umfasst, in die der Dichtungsabschnitt (1324) eingesetzt ist.

2. Bremsvorrichtung (1000) nach Anspruch 1, wobei die Umwandlungsbaugruppe (1320) ferner ein Kugellager (1323) umfasst, das auf einer Außenumfangsfläche der Kugelgewindemutter (1321) montiert ist.

3. Bremsvorrichtung (1000) nach Anspruch 2, wobei die Kugelgewindemutter (1321) einen Kontaktabschnitt (1321a) umfasst, der so ausgebildet ist, dass er von der Außenumfangsfläche derselben vorsteht und mit dem Kugellager (1323) in Kontakt steht.

4. Bremsvorrichtung nach einem der Ansprüche 1 bis 3, wobei ein Spalt zwischen einer Seite des Kopfes (1322a) und einer Seite der Verbindungsfläche (1331) ausgebildet ist.

5. Bremsvorrichtung (1000) nach einem der Ansprüche 1 bis 4,
wobei die Kugelgewindespindel (1322) mindestens eine darin ausgebildete Verdrehsicherungsnut (1322b) umfasst, und
wobei die mindestens eine Verdrehsicherungsnut (1322b) eine vieleckige Form aufweist.

6. Bremsvorrichtung (1000) nach einem der Ansprüche 1 bis 4, wobei die Kugelgewindespindel (1322) länger als eine Länge der Kugelgewindemutter (1321) ausgebildet ist.

7. Bremsvorrichtung (1000) nach einem der Ansprüche 1 bis 6,
wobei der Kolben (1330) mindestens zwei Druckbeaufschlagungsabschnitte (1350) umfasst, die in Bezug auf eine Mitte der Umwandlungsbaugruppe (1320) in einer ersten Richtung oder einer zweiten Richtung symmetrisch voneinander beabstandet angeordnet sind, und
wobei die zweite Richtung senkrecht zur ersten Richtung ist.

8. Bremsvorrichtung (1000) nach Anspruch 7,
wobei die mindestens zwei Druckbeaufschlagungsabschnitte (1350) Folgendes umfassen:
erste Druckbeaufschlagungsabschnitte (1351), die in der ersten Richtung symmetrisch voneinander beabstandet angeordnet sind; und
zweite Druckbeaufschlagungsabschnitte (1352), die in der zweiten Richtung symmetrisch voneinander beabstandet angeordnet sind,
wobei die ersten Druckbeaufschlagungsabschnitte (1351) eine Anschlagnut (1353) umfassen, und
wobei die Bremsvorrichtung (1000) ferner eine Rückenplatte (1600) mit einem auf einer ihrer Oberflächen ausgebildeten Anschlagvorsprung (1610) umfasst, und wobei die Anschlagnut (1353) dazu ausgebildet ist, mit dem Anschlagvorsprung (1610) in Kontakt zu kommen.

9. Fahrzeug, umfassend:
eine Fahrzeugkarosserie;
ein Rad, das sich unter der Fahrzeugkarosserie befindet und rotiert;
eine Bremsscheibe (10), die mit dem Rad gekoppelt ist und zusammen mit dem Rad rotiert;
eine Bremsvorrichtung nach Anspruch 1, wobei ein Ende der Bremsscheibe (10) in den Bremssattelkörper (1100) eingesetzt ist, und wobei eine Oberfläche des Bremsbelags (1200) der Bremsscheibe (10) zugewandt ist.

10. Fahrzeug nach Anspruch 9, wobei die Umwandlungsbaugruppe (1320) ferner ein Kugellager (1323) umfasst, das auf einer Außenumfangsfläche der Kugelgewindemutter (1321) montiert ist.

11. Fahrzeug nach Anspruch 10, wobei die Kugelgewindemutter (1321) einen Kontaktabschnitt (1321a) umfasst, der so ausgebildet ist, dass er von der Außenumfangsfläche derselben vorsteht und mit dem Kugellager (1323) in Kontakt steht.

## Revendications

1. Dispositif de freinage (1000) comprenant:
un corps d'étrier (1100);
une plaquette de frein (130) montée sur un côté du corps d'étrier (1100);
une partie de montage (1700) formée à l'intérieur du corps d'étrier (1100); et
un dispositif de propulsion de plaquette (1300) situé dans la partie de montage (1700) et conçu pour exercer une pression sur une surface de la plaquette de frein (1200),
dans lequel l'unité de propulsion de plaquette (1300) comprend:
un moyen de rotation (1310) en rotation;
un ensemble de conversion (1320) venant en prise avec le support rotatif (1310) et transformant le mouvement de rotation en mouvement linéaire en association avec le moyen de rotation (1310); et
un piston (1330) conçu pour entourer un côté de l'ensemble de conversion (1320),
dans lequel l'ensemble de conversion (1320) comprend:
un écrou de vis à billes (1321) couplé au moyen de rotation (1310) et tournant conjointement avec le moyen de rotation (1310); et
un boulon de vis à billes (1322) qui traverse le moyen de rotation (1310) et l'écrou de vis à billes (1321) et qui se déplace vers l'avant ou vers l'arrière sous l'effet de la rotation de l'écrou de vis à billes (1321),
dans lequel le boulon de vis à billes (1322) comprend une tête (1322a) présentant une surface incurvée sur un côté de la tête (1322a),
**caractérisé en ce que**
le piston (1330) comporte une surface de liaison (1331) présentant une surface incurvée conçue pour épouser la surface incurvée de la tête (1322a),
dans lequel la tête (1322a) du boulon de vis à billes (1322) est insérée dans le piston (1330),
dans lequel l'ensemble de conversion (1320) comprend en outre une partie d'étanchéité annulaire (1324) accouplée à une surface circonférentielle extérieure de la tête (1322a), et
dans lequel le piston (1330) comporte une rainure d'insertion dans laquelle s'insère la partie d'étanchéité (1324).

2. Dispositif de freinage (1000) selon la revendication 1, dans lequel l'ensemble de conversion (1320) comprend en outre un roulement à billes (1323) monté sur une surface circonférentielle extérieure de l'écrou de vis à billes (1321).

3. Dispositif de freinage (1000) selon la revendication 2, dans lequel l'écrou de vis à billes (1321) comporte une partie de contact (1321a) formée de manière à faire saillie de sa surface circonférentielle extérieure et à venir en contact avec le roulement à billes (1323).

4. Dispositif de freinage selon l'une quelconque des revendications 1 à 3, dans lequel un espace est formé entre un côté de la tête (1322a) et un côté de la surface de liaison (1331).

5. Dispositif de freinage (1000) selon l'une quelconque des revendications 1 à 4,
dans lequel le boulon de vis à billes (1322) comporte au moins une rainure anti-rotation (1322b) formée en son sein, et
dans lequel l'au moins une rainure anti-rotation (1322b) se présente sous la forme polygonale.

6. Dispositif de freinage (1000) selon l'une quelconque des revendications 1 à 4, dans lequel le boulon de vis à billes (1322) est plus longue que l'écrou de vis à billes (1321).

7. Dispositif de freinage (1000) selon l'une quelconque des revendications 1 à 6,
dans lequel le piston (1330) comprend au moins deux parties de mise sous pression (1350) qui sont disposées symétriquement à distance l'une de l'autre dans une première direction ou une deuxième direction par rapport au centre de l'ensemble de conversion (1320), et
dans lequel la deuxième direction est perpendiculaire à la première direction.

8. Dispositif de freinage (1000) selon la revendication 7,
dans lequel les au moins deux parties de mise sous pression (1350) comprennent:
des premières parties de mise sous pression (1351) disposées symétriquement et espacées les unes des autres dans la première direction; et
des deuxièmes parties de mise sous pression (1352) disposées symétriquement et espacées les unes des autres dans la deuxième direction,
dans lequel les premières parties de mise sous pression (1351) comportent une rainure d'arrêt (1353), et
dans lequel le dispositif de freinage (1000) comprend en outre une plaque arrière (1600) sur laquelle est formée une saillie d'arrêt (1610), et la rainure d'arrêt (1353)est conçue pour venir en contact avec la saillie d'arrêt (1610).

9. Véhicule comprenant:
une carrosserie;
une roue située sous la carrosserie du véhicule et qui tourne;
un disque de frein (10) relié à la roue et tournant conjointement avec la roue;
un dispositif de freinage selon la revendication 1, dans lequel une extrémité du disque de frein (10) est insérée dans le corps d'étrier (1100), et dans lequel une surface de la plaquette de frein (1200) est tournée vers le disque de frein (10).

10. Véhicule selon la revendication 9, dans lequel l'ensemble de conversion (1320) comprend en outre un roulement à billes (1323) monté sur une surface circonférentielle extérieure de l'écrou de vis à billes (1321).

11. Véhicule selon la revendication 10, dans lequel l'écrou de vis à billes (1321) comprend une partie de contact (1321a) formée de manière à faire saillie de sa surface circonférentielle extérieure et à venir en contact avec le roulement à billes (1323).
